# EUROPEAN PATENT APPLICATION

(11) **EP 3 002 714 A1**
(43) Date of publication of application: **06.04.2016**
(21) Application number: 15000571.8
(22) Date of filing: 27.02.2015
(51) Int. Cl.: G06Q 10/02

(54) **Ticketing system with integrated personalized data**

(30) Priority: 30.09.2014 US 201414501734
(71) Applicant: Amadeus S.A.S., 06410 Biot (FR)
(72) Inventor: Minh-Tuan, Tran, 06200 Nice (FR)
(74) Representative: Samson & Partner Patentanwälte mbB

(57) **Abstract**

Methods, systems, and computer program products for personalizing a ticket for a travel-related service by associating functional data entered by the traveler with electronic ticket files defining an electronic ticket for the travel-related service. A system for shopping for and booking travel services may receive functional data specified by a traveler to personalize a reservation associated with the trip. The functional data may be entered through a user interface and stored in or linked to a Passenger Name Record (PNR) associated with the itinerary. Functional data may be stored in a functional information database and linked to the PNR by a functional element stored in the PNR that identifies a location of the functional data in the functional information database. The functional data may be integrated with the electronic ticket so that both the functional data and technical data are provided to the traveler by the ticket.

## Description

### BACKGROUND

The invention generally relates to computers and computer systems and, in particular, to methods, systems, and computer program products that provide and maintain data relating to electronic tickets for travel services.

Travelers on common carriers, such as railways and airlines, typically reserve seats for travel by purchasing tickets. Although tickets may be printed on paper as a form of proof that the traveler is entitled to the purchased service, electronic tickets have largely replaced paper tickets in the travel industry. An electronic ticket comprises a digital file located in a database of a computer system, such as an electronic ticketing system. The carrier can determine if the traveler is entitled services by accessing the digital file, which provides an electronic record of the traveler's reservation. The digital file may store technical information specific to the reserved travel service, such as dates and times when services are to be rendered, origin and destination locations, seat assignment, travel class, the identity of the ticket holder, and a current status of the electronic ticket.

While on their trip, travelers often have tasks they wish to accomplish, events they would like to participate in, or a need to access other information that is not included in the reserved itinerary. Typically, the traveler will either rely on their memory to remind them of these extra-itinerary activities, or will write themselves "to-do" lists or notes that provide any necessary reminders or information needed during the trip. However, the traveler may fail to remember this information, or be unable to access the notes when needed due to loss or misplacement. For example, it may be impractical to retrieve this supplementary information when needed if the notes are in checked baggage, or were written on a discarded boarding pass. If the information is of a sensitive nature, information stored in personal notes may also present security issues. Lost information may also put the traveler in a difficult situation if the information it related to activities involving others, such as a telephone number of a business contact whom the traveler is meeting, or a reminder to carry out a task for another person.

Thus, improved methods, systems, and computer program products are needed for storing and maintaining trip information provided by travelers and that may not be directly related to the travel services comprising the trip itinerary.

### SUMMARY

In an embodiment of the invention, a method of managing information relating to a trip is provided. The method includes receiving functional data specified by a traveler to personalize a reservation for a travel service associated with the trip. The method further includes adding by the functional data or a link to the functional data to a passenger name record that comprises technical data used to define the travel service.

In another embodiment of the invention, a system for managing information relating to a trip is provided. The system includes a processor and a memory coupled to the processor. The memory includes instructions that, when executed by the processor, cause the system to receive the functional data specified by the traveler to personalize the reservation for the travel service associated with the trip. The instructions may further cause the system to add the functional data or the link to the functional data to the passenger name record comprising the technical data used to define the travel service.

In another embodiment of the invention, a computer program product is provided that includes a non-transitory computer-readable storage medium including instructions. The instructions may be configured, when executed by the processor, to cause the processor to receive the functional data specified by the traveler to personalize the reservation for the travel service associated with the trip. The instructions may further cause the processor to add the functional data or the link to the functional data to the passenger name record comprising the technical data used to define the travel service.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a plurality of computing systems in communication via a network.
FIG. 2 is a diagrammatic view of an exemplary computing system of FIG. 1.
FIG. 3 is a diagrammatic view of a system for shopping for and booking travel services that includes a shopping module, a booking module, a ticketing module, a personalization module, a functional information database, and a Passenger Name Record (PNR) database.
FIG. 4 is a diagrammatic view of a user interface for entering data into the ticketing system of FIG. 3.
FIG. 5 is a diagrammatic view of an electronic ticket including functional data entered using the user interface of FIG. 4.
FIG. 6 is a flowchart of a process for formatting a ticket including functional data that may be performed by the ticketing system of FIG. 3.

### DETAILED DESCRIPTION

Embodiments of the invention are directed to methods, systems, and computer program products for managing information relating to a trip. The information may include technical data relating to travel services comprising a trip itinerary, and functional data provided by the traveler. The functional data may include information the traveler wishes to access during the trip, such as information relating to extra-itinerary activities, reminders, trip notes, contact information, or action items. Embodiments of the invention may store the functional data, or an element containing a location of the functional data, in a Passenger Name Record (PNR) so that the functional data can be included in an electronic ticket.

Embodiments of the invention may be implemented by a system comprising one or more networked computers or servers. The networked computers may include a Global Distribution System (GDS), and may provide processing and database functions for travel-related systems and modules that format the electronic ticket to include the functional data. The functional data may be enriched with data provided by parties other than the traveler, which may include offers for additional travel services. The functional data may also be used by the parties to identify information, additional travel services, or other products in which the traveler may be interested.

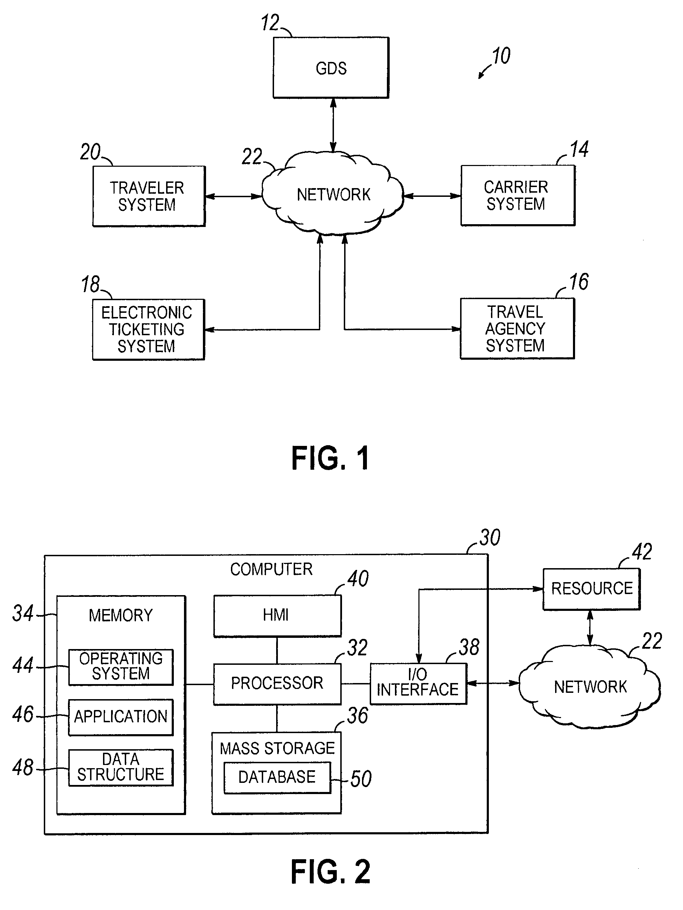

Referring now to FIG. 1, an operating environment 10 in accordance with an embodiment of the invention may include a Global Distribution System (GDS) 12, one or more travel service provider systems (e.g., carrier system 14), one or more indirect seller systems (e.g., travel agency system 16), an electronic ticketing system 18, and a traveler system 20. Each of the GDS 12, carrier system 14, travel agency system 16, electronic ticketing system 18, and traveler system 20 may communicate through a network 22, which may include one or more private or public networks (e.g., the Internet) that enable the exchange of data.

The GDS 12 may be configured to facilitate communication between the carrier system 14 and travel agency system 16 by enabling travel agents, validating carriers, or other indirect sellers to book reservations on the carrier system 14 via the GDS 12. The GDS 12 may maintain links to a plurality of carrier systems via the network 22 that enable the GDS 12 to route reservation requests from the validating carrier or travel agency to a corresponding operating carrier. The carrier system 14 and travel agency system 16 may thereby book flights on multiple airlines via a single connection to the GDS 12.

One or both of the carrier system 14 and the electronic ticketing system 16 may include a Computer Reservation System (CRS) that enables the GDS 12 or travel agency system 16 to reserve and pay for travel services. In an embodiment of the invention, the electronic ticketing system 18 may be provided by the carrier system 14. The carrier system 14 may also interact with other carrier systems (not shown), either directly or through the GDS 12, to enable a validating carrier to sell tickets for seats provided by the operating carrier. The operating carrier may then bill the validating carrier for the services provided.

The travel agency system 16 may be configured to enable travel agents to search for and book travel services for the traveler through the GDS 12 or carrier system 14. The travel agency system 16 may also provide on-line travel services, such as travel services provided by an on-line travel agency or a travel service re-seller web-site accessible by the traveler system 20. The traveler system 20 may comprise a suitable computer device, such as a desktop, laptop, or tablet computer, smart phone, or other portable device. The traveler may use the traveler system 20 to search for and book travel services by accessing the GDS 12, carrier system 14, travel agency system 16, electronic ticketing system 18, or any other suitable system though the network 22.

Referring now to FIG. 2, the GDS 12, carrier system 14, travel agency system 16, electronic ticketing system 18, and traveler system 20 of operating environment 10 may be implemented on one or more computer devices or systems, such as exemplary computer system 30. The computer system 30 may include a processor 32, a memory 34, a mass storage memory device 36, an input/output (I/O) interface 38, and a Human Machine Interface (HMI) 40. The computer system 30 may also be operatively coupled to one or more external resources 42 via the network 22 or directly through the I/O interface 38.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information in the form of data. The mass storage memory device 36 may include data storage devices such as a hard drive, optical drive, tape drive, non-volatile solid state device, or any other device capable of storing information in the form of data.

Processor 32 may operate under the control of an operating system 44 that resides in memory 34. The operating system 44 may manage computer resources so that computer program code embodied as one or more computer software applications, such as application 46 residing in memory 34, may have instructions executed by the processor 32. In an alternative embodiment, the processor 32 may execute the application 46 directly, in which case the operating system 44 may be omitted. One or more data structures 48 may also reside in memory 34, and may be used by the processor 32, operating system 44, or application 46 to store or manipulate data.

The I/O interface 38 may provide a machine interface that operatively couples the processor 32 to other devices and systems, such as the network 22 or external resource 42. The application 46 may thereby work cooperatively with the network 22 or external resource 42 by communicating via the I/O interface 38 to provide the various features, functions, and modules comprising embodiments of the invention. The application 46 may also have program code that is executed by one or more external resources 42, or otherwise rely on functions or signals provided by other system or network components external to the computer system 30. Indeed, given the nearly endless hardware and software configurations possible, persons having ordinary skill in the art will understand that embodiments of the invention may include applications that are located externally to the computer system 30, distributed among multiple computers or other external resources 42, or provided by computing resources (hardware and software) that are provided as a service over the network 22, such as a cloud computing service.

The HMI 40 may be operatively coupled to the processor 32 of computer system 30 in a known manner to allow a user to interact directly with the computer system 30. The HMI 40 may include video or alphanumeric displays, a touch screen, a speaker, or any other suitable audio and visual indicators capable of providing information to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

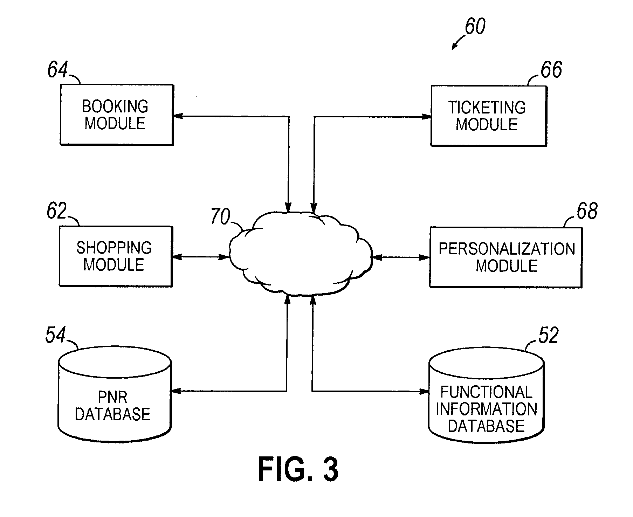

A database 50 may reside on the mass storage memory device 36, and may be used to collect and organize data used by the various systems and modules described herein. The database 50 may include data and supporting data structures that store and organize the data. In particular, the database 50 may be arranged with any database organization or structure including, but not limited to, a relational database, a hierarchical database, a network database, or combinations thereof. A database management system in the form of a computer software application executing as instructions on the processor 32 may be used to access the information or data stored in database records in response to a query, where a query may be dynamically determined and executed by the operating system 44, application 46, or one or more modules. In an embodiment of the invention, the database 50 may comprise one or more of a functional information database 52 or a Passenger Name Record (PNR) database 54 (FIG. 3).

Referring now to FIG. 3, an exemplary system 60 for shopping for travel services and booking travel services in accordance with an embodiment of the invention may include the functional information database 52, the PNR database 54, a shopping module 62, a booking module 64, a ticketing module 66, and a personalization module 68. The functional information database 52, PNR database 54, shopping module 62, booking module 64, ticketing module 66, and personalization module 68 may each be provided by a suitable computing system, and may be in communication through a medium 70, such as a communication network or a shared memory space. Suitable computing systems may include, for example, one or more of the GDS 12, carrier system 14, travel agency system 16, electronic ticketing system 18, or traveler system 20.

Purchasing a travel service may comprise shopping for the travel service, pricing the travel service, booking the travel service, and ticketing the travel service. The traveler may shop for travel services, for example, by accessing the shopping module 62 using the traveler system 20. The shopping module 62 may put the traveler in communication with a source of travel services such as an airline, railway, hotel, rental car, or travel services re-seller. For example, the shopping module 62 may provide a web-site for an on-line travel agency or a seller of travel services that is accessible using a browser application operating on the traveler system 20. The shopping module 62 may be provided by the GDS 12, carrier system 14, travel agency system 16, electronic ticketing system 18, or other suitable computing system, such as a system operated by a travel service provider or travel service re-seller.

The traveler may search for travel services by providing search terms to the shopping module 62. Search terms may include desired departure and arrival dates, destination and origination cities, desired services (e.g., flights, train reservations, hotel rooms, car rentals, upgrades, service options, etc.), pricing information, or any other information relating to the desired travel service. In response to receiving the search terms, the shopping module 62 may cause the traveler system 20 to display one or more travel services matching the search terms. The traveler may then select one or more of the displayed travel services for booking.

In response to the traveler indicating a desire to book the selected travel service, the booking module 64 may price the travel service. If the travel service includes a flight or other service provided by a common carrier (e.g., a rail, bus, or ferry transport service), the booking module 64 may access a fare engine residing in the GDS 12 to determine the fare. The fare engine may determine a total fare for the travel service by calculating a fare for each of one or more segments comprising the travel service itinerary, and summing these fares to generate the total fare.

Booking the travel service may include checking the provider inventory for availability of the service. Examples of availability may include unsold seats for selected carrier segments, hotel room vacancies, available rental cars, etc. This check may include sending a reservation request from the travel agency system 16 to the GDS 12. The GDS 12 may in turn query a corresponding CRS for availability of the services defined in the booking request. If the requested services are available, the services may be booked, and the provider inventory adjusted to reflect the booking. In response to the traveler approving the transaction, the traveler's account may be billed for the price of the services.

In response to a travel service being booked, the GDS 12 may receive and store a PNR for that service, or modify an existing PNR to reflect the addition of the booked service to an existing itinerary. The PNR may be generated, at least in part, by the GDS 12, carrier system 14, electronic ticketing system 18, or CRS, and may comprise one or more reservation records that define one or more booked reservations. The PNR may also track usage of the purchased travel services by identifying the travel service as active (e.g., a service yet to be provided by the corresponding service provider), passive (e.g., a service reserved in another system or provided by a third party), past date, used (e.g., flown), open (e.g., for a purchased service having an open date), or canceled. The PNR may also include informational elements that store data relating to the travel service, and functional elements that store references to data in the functional information database 52.

The PNR may be stored in the PNR database 54, and may be accessed by the GDS 12, carrier system 14, travel agency system 16, electronic ticketing system 18, or any other suitable computing system. The PNR may be identified by a record locator unique to that PNR, and may include reservation records defining an itinerary for a particular trip, service, passenger, or group of passengers. The itinerary may include services from multiple carriers (e.g., flights, bus, or rail segments), hotel reservations, rental car reservations, or other travel-related services, such as a tour or other trip-related activity.

To provide a record of purchased travel services, an electronic ticket may be issued that comprises one or more electronic coupons of which each electronic coupon corresponds to at least a portion of the services booked. The ticket may include an itinerary defining one or more services for which the electronic ticket can be redeemed, such as a boarding pass. In particular, carrier services may include one or more transportation segments defined by the itinerary, each of which may comprise one or more sequential legs connecting a scheduled departure station to a scheduled arrival station. As the booked services are used, the electronic coupons may be updated to reflect the travel service has been received.

The personalization module 68 may be configured to receive information from the traveler relating to personal or functional aspects of the trip, such as functional data that is not directly related to a booked travel service. To this end, the personalization module 68 may provide a user interface configured to receive functional data from the traveler. The functional data may be stored in the PNR as a PNR element if the functional data is compatible with PNR data formatting. For example, some functional data may be stored in the PNR as a remark element. Functional data may also be stored in the functional information database 52, which may be a dedicated database configured to store functional data. To link the PNR with data in the functional information database 52, a functional element may be added to the PNR that provides a reference to a storage location of the functional data in the functional information database 52. The system 60 may thereby store functional data that is not compatible with PNR data formatting.

In contrast to technical data about the booked travel services, such as departure and arrival times, room numbers, or vehicle type, functional data may be related to personal information that is not directly related to the delivery of travel services. Exemplary functional data may include notes reminding the traveler to pick up a souvenir or attend an appointment, contact information (e.g., a name, address, or telephone number), a place the traveler wishes to visit, a map depicting an area around an airport, rail station, or a route to a hotel or other site of interest, a working plan or agenda, personal notes, photos, scanned documents, or any other information the traveler wishes to have available during the trip.

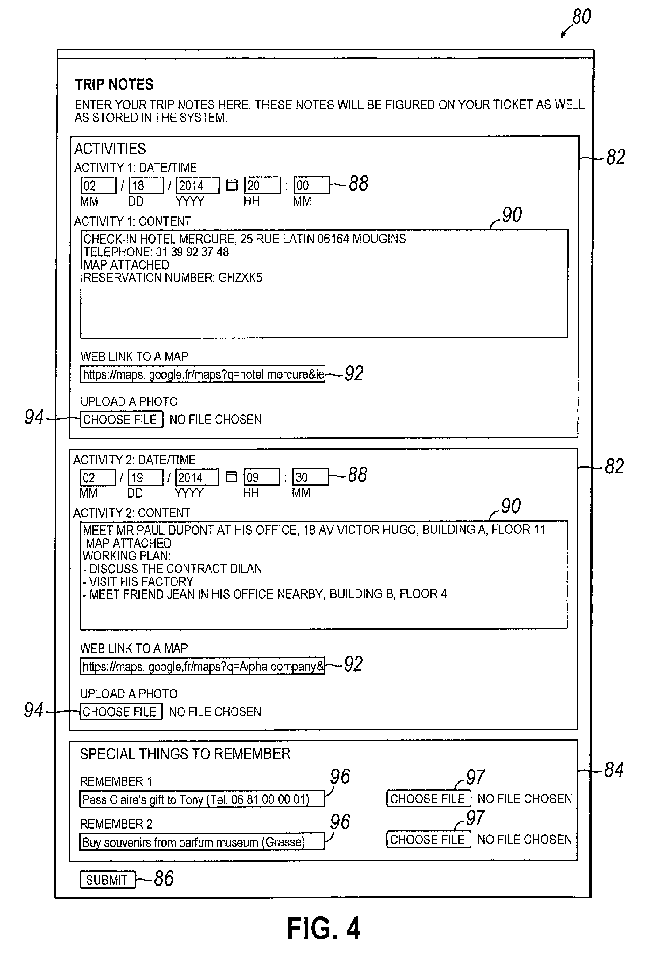

Referring now to FIG. 4, an exemplary user interface 80 may include one or more of activity entry windows 82, one or more memo entry windows 84, and a submit data button 86. Each activity entry window 82 may include a date and time data entry field 88 for entering a scheduled time for the activity, a content data entry field 90 for entering a narrative describing the activity, a web-link data entry field 92, and a choose file button 94 for uploading a file relating to the activity, such as an image. The web-link data entry field 92 may be used to enter a web-link to a map, another travel service, or other web-based information relating to the activity. By way of example, the traveler may add a link to a hotel reservation to the electronic ticket for a flight. Adding the link to the electronic ticket may enable the traveler to access the hotel reservation from the electronic ticket by clicking on the link. This feature may be useful, for example, if the traveler reserves a room in a hotel that lacks a reservation system that allows room reservations to be integrated into the PNR.

The memo entry window 84 may include one or more data entry fields 96 configured to receive notes relating to tasks for which the traveler wishes to be reminded. The memo entry window 84 may also include a choose file button 97 for selecting files, such as images, to be uploaded and associated with the reminder. The user interface 80 may save entered data as functional data in response to activation of the submit data button 86. The user interface 80 may thereby enable the traveler to enter dates and times for their planned activities and activity notes directly or by copying and pasting data from other sources (e.g., e-mail files, documents, web pages, etc.), and have this functional data stored by the system 60. The user interface 80 may also support integration of images with the functional data using links to web pages, such as mapping web sites, or by uploading an image file.

In response to receiving the functional data, the personalization module 68 may integrate the functional data with the technical information for output in the form of an electronic ticket. Once all relevant functional data has been retrieved, the ticketing module 66 may format the technical and functional data appropriately and transmit the resulting electronic ticket to the traveler or other interested party. The resulting electronic ticket may include both the technical data and functional data, and may be displayed on traveler system 20, such as in the form of a web page or other document. Thus, the electronic ticket may be retrieved and displayed as needed using a portable device, such as a smart phone.

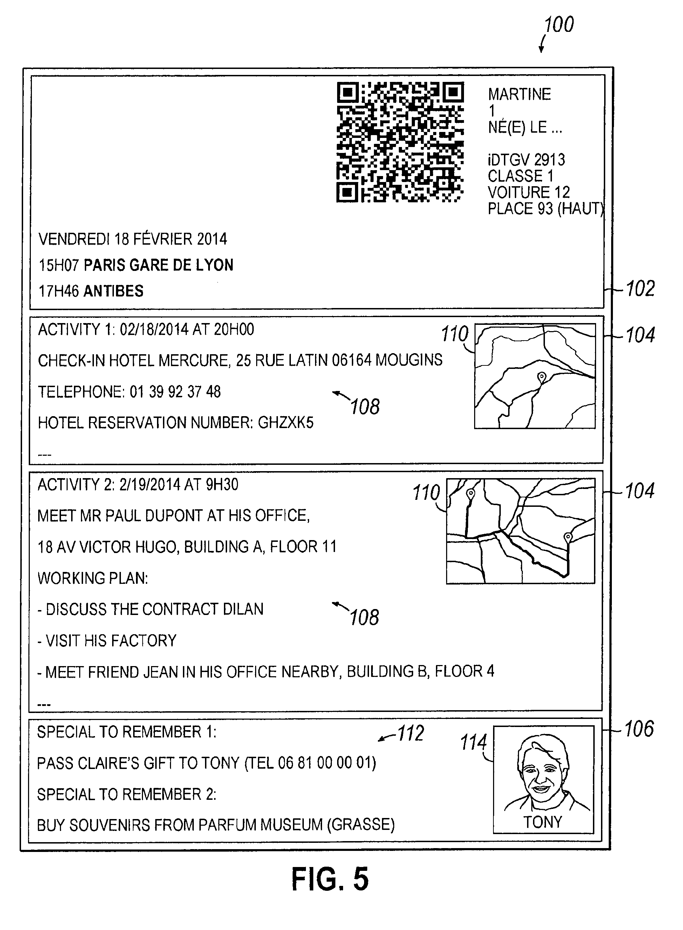

Referring now to FIG. 5, an exemplary electronic ticket 100 may include one or more coupons 102 identifying travel services the traveler is entitled to receive, one or more activity information windows 104, and one or more memo windows 106. The activity information windows 104 may display the functional data relating to the activity in question in the form of text 108 and images 110. The text 108 may include data entered into the date and time data entry field 88 and the content data entry field 90 of user interface 80. The images 110 may include an image provided by a link entered into the web-link data entry field 92, or an image uploaded using the choose file button 94. In an embodiment of the invention, clicking on or otherwise selecting the image 110 may open the corresponding link or file in a separate window, thereby enabling the traveler to interact with the displayed image. Each memo window 106 may display text 112 that was entered into the data entry fields 96 of user interface 80, and an image 114 that was uploaded using the choose file button 97 of memo entry window 84. In any case, the electronic ticket 100 may be displayed on an electronic device, such as a smart phone or other portable computer device, or may be printed out on a tangible media, such as paper.

The functional data may be entered when booking the travel service and stored securely as part of the electronic ticket files. In cases where the traveler wishes to add functional data to a previously-booked travel service, the traveler may access the personalization module 68 using a booking reference and enter the functional data directly. The added functional data may then be stored in the functional information database 52, the PNR database 54, or in one or more of the data files comprising the electronic ticket as described above. Functional data comprising data files that are large or otherwise incompatible with the PNR database 54, such as images uploaded using the choose file button 94 of user interface 80, may be stored in the functional information database 52. Functional data stored in the functional information database 52 may be indexed to a corresponding electronic ticket in the electronic ticketing system 18 or PNR in the PNR database 54 using a unique identifier, such as the record locator of the PNR.

In an embodiment of the invention, parties other than the traveler, or "outside parties", may have access to the functional data. These outside parties may include travel agents, travel service providers, or any other party wishing to obtain information about or provide information to the traveler. This information may include, for example, information relating to the travel habits of the traveler, or offers to sell additional travel services to the traveler. Access to the functional data by outside parties may be controlled so that outside parties can only add to the functional data, can only read the functional data, or can both read and add to the functional data. This access level may be set depending on the identity of the outside party and their relationship to the traveler. For example, access to add functional data may be granted in response to approval by the traveler. Embodiments of the invention may thereby enable outside parties to use the functional data feature to provide complementary information or proposals to, and obtain marketing data from, the traveler.

By way of example, the CRS may enrich the traveler's activities list with additional information, such as a currency exchange rate, a cultural aspect of a region being traveled to or in, something to avoid while traveling in the region, a law particular to the region, etc. The CRS may also provide a notification to the traveler in response to a timely event, such as a traffic status of a route, a delayed or on-time flight, an emergency event, such as bad weather or a natural disaster, or to provide a scheduled activity reminder alarm. The reminder may comprise a timely electronic message, such as an e-mail or text message, sent to the traveler system 20, or an alarm setting automatically entered into an application running on the traveler system 20, such as a calendar application.

As another example, the travel agency or travel service provider from which the traveler purchased the travel product may provide an offer, such as a proposal or suggestion (e.g., a coupon or recommendation for a restaurant, a hotel, or to rent a car) in accordance with the traveler's activities as determined from the functional data. If the traveler books the proposed addition, the corresponding reservation may be integrated into the existing travel itinerary. Functional data entered by travelers may also be used by business intelligence processes in order to propose more relevant offers to the traveler during future trip shopping sessions.

To access the functional data, the traveler may connect to the ticketing module 66, provide the booking reference to identify the travel itinerary in question, and submit a retrieval request. This may entail, for example, accessing a web-page provided by the ticketing module 66 and entering the booking reference and a password into a data field. In response to the traveler connecting to the ticketing module 66, the ticketing module 66 may determine if there is an existing PNR in the PNR database 54 matching the booking reference, and if so, search the functional information database 52 for functional data based on data extracted from the PNR.

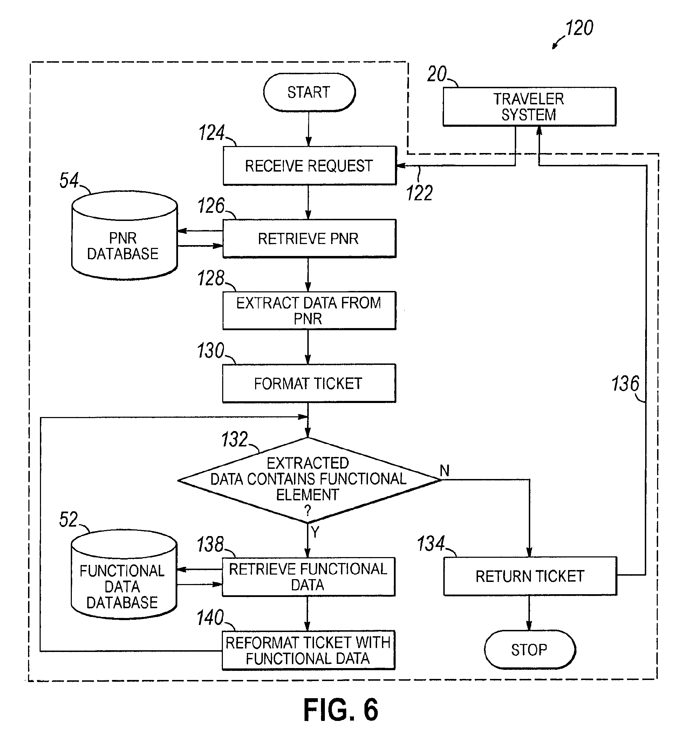

Referring now to FIG. 6, a flow chart is presented that depicts a process 120 which may be executed by a computer system, such as the electronic ticketing system 18, in response to receiving a request 122 for the electronic ticket. In block 124, the process 120 may receive the request 122. The request 122 may be received, for example, from the traveler system 20 as shown, or from any other suitable system, such as the carrier system 14 or travel agency system 16. The traveler, an agent for the carrier, a travel agent, or other authorized party may thereby request the electronic ticket. In response to receiving the request 122, the process 120 may proceed to block 126 and retrieve the PNR from the PNR database 54. The process 120 may determine which PNR to retrieve from the PNR database 54 based on data in the request identifying the travel itinerary, such as the booking reference or record locator.

In response to receiving the PNR, the process 120 may proceed to block 128. In block 128, the process may extract data relating to the travel itinerary from the PNR. This data may include technical data used to generate coupons for booked travel services. The extracted data may also include functional data or functional elements. A functional element may comprise a key or other reference data that provides the process 120 with a location of related functional data in the functional information database 52.

In response to extracting the data, the process 120 may proceed to block 130 and format the ticket. Formatting the ticket may include generating a digital file or image that includes travel coupons and functional data included in the PNR. The process 120 may then proceed to block 132 and determine if the extracted data includes one or more functional elements. If the extracted data does not include a functional element ("NO" branch of decision block 132), the process 120 may proceed to block 134 and return the ticket to the requesting system, e.g., the traveler system 20. For example, the ticket may be returned in a reply 136 to the request 122. In response to the extracted data including a functional element ("YES" branch of decision block 128), the process 120 may proceed to block 138.

In block 138, the process 120 may query the functional information database 52 for the functional data identified by the functional element. The process 120 may then proceed to block 140 and reformat the ticket to include the functional data retrieved from the functional information database 52. In response to reformatting the ticket, the process may remove or flag the functional element to indicate that the corresponding functional data has been added to the ticket. The process 120 may then return to block 132 and determine if the extracted data includes any additional functional elements for which functional data has yet to be retrieved. The process may then either proceed to block 134 and return the ticket, or to block 138 and retrieve the additional functional data.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus or system, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method of managing information relating to a trip, the method comprising:
receiving, at a computer, first functional data specified by a traveler to personalize a reservation for a first travel service associated with the trip; and
adding, by the computer, the first functional data or a first link to the first functional data to a passenger name record that comprises technical data used to define the first travel service.

2. The method of claim 1 further comprising:
generating a ticket for the first travel service based on at least a portion of the technical data; and
appending the first functional data to the ticket so that the first functional data is output with the ticket.

3. The method of claim 1 or claim 2 wherein the passenger name record is identified by a record locator, and further comprising:
in response to receiving a query including the record locator from a traveler system, transmitting the first functional data to the traveler system.

4. The method of any of claims 1 to 3 wherein adding the first link to the passenger name record comprises:
adding an element that identifies a storage location of the first functional data to the passenger name record.

5. The method of claim 4 wherein the storage location is in a first database, the passenger name record is stored in a second database, and the element in the passenger name record comprises an identifier that identifies the storage location of the first functional data in the first database.

6. The method of any of claims 1 to 3 wherein linking the first functional data to the passenger name record comprises:
adding an element to the passenger name record; and
storing the first functional data in the element.

7. The method of any of claims 1 to 6 further comprising:
in response to receiving a request to book the first travel service based on the technical data, generating a booking reference; and
associating the passenger name record with the booking reference,
wherein the first functional data is linked to the passenger name record based on the booking reference.

8. The method of claim 7 wherein the booking reference comprises a record locator of the passenger name record.

9. The method of any of claims 1 to 8 further comprising:
determining a second travel service to propose to the traveler based on the first functional data; and
causing an offer for the second travel service to be communicated to the traveler.

10. The method of any of claims 1 to 9 further comprising:
determining second functional data based on the first functional data; and
adding the second functional data or a second link to the second functional data to the passenger name record.

11. The method of claim 10 wherein the second functional data comprises a web-link to a second travel service, a currency exchange rate, a cultural aspect of a region, something to avoid while traveling in the region, a law particular to the region, a notification, a traffic status, an emergency event, or a reminder.

12. The method of any of claims 1 to 10 wherein the first functional data comprises an image file, a web-link to a second travel service, or a web-link to an image.

13. A system for managing information relating to a trip, the system comprising:
a processor; and
a memory including program code that, when executed by the processor, causes the system to:
receive first functional data specified by a traveler to personalize a reservation for a first travel service associated with the trip; and
add the first functional data or a first link to the first functional data to a passenger name record comprising technical data used to define the first travel service.

14. The system of claim 13 wherein the program code further causes the system to perform the method of any of claims 2 to 12.

15. A computer program product comprising:
a non-transitory computer-readable storage medium; and
program code stored on the non-transitory computer-readable storage medium that, when executed by a processor, causes the processor to perform the method of any of claims 1 to 12.
